# EUROPEAN PATENT APPLICATION

(11) **EP 4 268 567 A1**
(43) Date of publication of application: **01.11.2023**
(21) Application number: 23169977.8
(22) Date of filing: 26.04.2023
(51) Int. Cl.: A01D 34/416, A01D 34/84, A01D 34/90, A01G 3/06

(54) **WHEEL ATTACHMENT FOR GARDEN TOOL**

(30) Priority: 29.04.2022 CN 202210474142
(71) Applicant: Techtronic Cordless GP, Anderson, SC 29621 (US)
(72) Inventor: CHUNG, Koon For, Kwai Chung (HK); WONG, Tsz Kin, Kwai Chung (HK)
(74) Representative: Zimmermann & Partner Patentanwälte mbB

(57) **Abstract**

A wheel attachment for a garden tool comprises a guide wheel, and a wheel mounting frame on which the guide wheel is rollably mounted and which is detachably fixed to a guard of the garden tool. The wheel mounting frame comprises a fixing portion, which delimits a groove for accommodating an edge of the guard, and the edge of the guard is clamped by the fixing portion when the wheel mounting frame is fixed to the guard.

## Description

### Technical Field

The present invention relates to a wheel attachment for a garden tool, and in particular, to a wheel attachment for a grass trimmer.

### Background Art

A grass trimmer is a common garden tool for mowing a lawn. The grass trimmer comprises a long shaft, and a handle and a trimmer head that are located at two ends of the long shaft. During operation, a user holds the handle to push the grass trimmer to move on the lawn, and a cutting element on the trimmer head cuts the lawn horizontally. After the lawn is mowed, it is often necessary to further trim the boundary of the lawn. Since a conventional grass trimmer is only suitable for horizontal cutting, the user needs to use a lawn edge trimmer instead during edge trimming operation. The lawn edge trimmer is similar to the grass trimmer in structure, but its cutting element is suitable for vertical cutting. The lawn edge trimmer is further provided with a guide wheel, which is positioned behind the cutting element and configured to guide the lawn edge trimmer to move along the boundary of the lawn.

In order to reduce the burden on the user, a wheel attachment is needed. After the wheel attachment is mounted, the grass trimmer can be used as a lawn edge trimmer. The wheel attachment should have a wide applicability, so as to be mounted on grass trimmers of different models, and there is no need to modify the grass trimmers.

### Summary of the Invention

In order to achieve the above objective, the present invention provides a wheel attachment for a garden tool, comprising a guide wheel and a wheel mounting frame on which the guide wheel is rollably mounted. The wheel mounting frames comprise a fixing portion, which is detachably fixed to an edge of the guard. The fixing portion delimits a groove for accommodating the edge of the guard, and the edge of the guard is clamped by the fixing portion when the wheel mounting frame is fixed to the guard.

In an embodiment, the guard comprises a cover portion and a shield portion, wherein the cover portion has an arc-shaped first edge and a non-arc-shaped second edge. The second edge comprises a recessed edge, the recessed edge comprises a recessed side wall, and at least a part of the recessed side wall is clamped by the fixing portion. The shield portion extends from the first edge, and when the wheel mounting frame is fixed to the guard, the guide wheel is located inside a circumference corresponding to the first edge.

In an embodiment, the fixing portion comprises a first clamping portion and a second clamping portion, and the groove for accommodating the edge of the guard is delimited between the first clamping portion and the second clamping portion. The second clamping portion is provided with a pointed screw having a tip facing first clamping portion.

In an embodiment, the first clamping portion delimits a fastener hole, and when the wheel mounting frame is fixed to the guard, a fastener passing through the fastener hole is in contact with an outer surface of the edge of the guard and applies a pressure to the outer surface, so as to clamp the edge of the guard together with the second clamping portion. Preferably, the fastener comprises a threaded fastener and a nut which is arranged inside the first clamping portion.

In an embodiment, the wheel mounting frame comprises a pressing portion, and when the wheel mounting frame is fixed to the guard, at least a part of the pressing portion abuts against an outer surface of the edge of the guard. Preferably, a friction-increasing material is provided on at least a part of the pressing portion.

In an embodiment, the pressing portion comprises a connecting portion and a contact portion, wherein the connecting portion is connected to the fixing portion and is movable relative to the fixing portion, and when the wheel mounting frame is fixed to the guard, the contact portion abuts against the outer surface of the edge of the guard. The wheel mounting frame further comprises a biasing component, which applies a biasing force towards the guard to the contact portion.

In an embodiment, the wheel mounting frame further comprises a wheel axle defining a rotation axis of the guide wheel and a wheel axle holding portion for fixing the wheel axle. The wheel axle holding portion delimits a guide groove, and at least a part of the wheel axle can move in the guide groove, so that a position of the wheel axle relative to the wheel axle holding portion is adjustable.

In an embodiment, the wheel mounting frame further comprises an actuating member, and the pressing portion applies a pressure to the outer surface of the edge of the guard under the action of the actuating member. The actuating member comprises a cam, which can move between a locked position and an unlocked position. When the cam moves from the unlocked position to the locked position, the cam pushes the pressing portion to move towards the guard. When the cam is in the locked position, the pressing portion applies the pressure to the outer surface of the edge of the guard. When the cam is in the unlocked position, the wheel mounting frame can be removed from the guard. The actuating member further comprises an operating portion connected to the cam, and the cam can rotate between the locked position and the unlocked position under the action of the operating portion. Preferably, the locked position and the unlocked position differ by 180 degrees.

In an embodiment, the wheel mounting frame further comprises an actuating member holding portion and an adjusting member, wherein a cam rotating shaft for defining a rotation axis of the cam is fixed to the actuating member holding portion, and a position of the actuating member holding portion can be changed by operating the adjusting member. The adjusting member comprises a knob and a bolt, wherein an end of the bolt is in contact with the actuating member holding portion, and a rotation of the knob in one direction causes an end of the bolt to push the actuating member holding portion.

### Brief Description of the Drawings

The exemplary embodiments of the present invention will be specifically described below with reference to the accompanying drawings.
FIG. 1 shows an electric grass trimmer.
FIG. 2 shows a wheel attachment according to a first embodiment of the present invention.
FIG. 3 shows a guard for a grass trimmer.
FIG. 4 shows a top view of a guard.
FIG. 5 shows a back face of the wheel attachment according to the first embodiment.
FIG. 6 shows an exploded view of the wheel attachment according to the first embodiment.
FIG. 7 shows a wheel mounting frame according to the first embodiment.
FIG. 8 shows a wheel attachment according to a second embodiment of the present invention.
FIG. 9 shows a wheel mounting frame according to the second embodiment.
FIG. 10 shows an exploded view of the wheel mounting frame according to the second embodiment.
FIG. 11 shows a wheel attachment according to a third embodiment of the present invention.
FIG. 12 shows an exploded view of the wheel mounting frame according to the third embodiment.
FIG. 13 shows a wheel attachment according to a fourth embodiment of the present invention.
FIG. 14 shows a wheel mounting frame according to the fourth embodiment.
FIG. 15 shows an exploded view of the wheel mounting frame according to the fourth embodiment.
FIG. 16A shows a cam in an unlocked position.
FIG. 16B shows the cam in a locked position.
FIG. 17 shows another exploded view of the wheel mounting frame according to the fourth embodiment.
FIG. 18 shows a wheel attachment according to a fifth embodiment of the present invention.
FIG. 19 shows a wheel mounting frame according to the fifth embodiment.
FIG. 20 shows an exploded view of the wheel mounting frame according to the fifth embodiment.

### Detailed Description of Embodiments

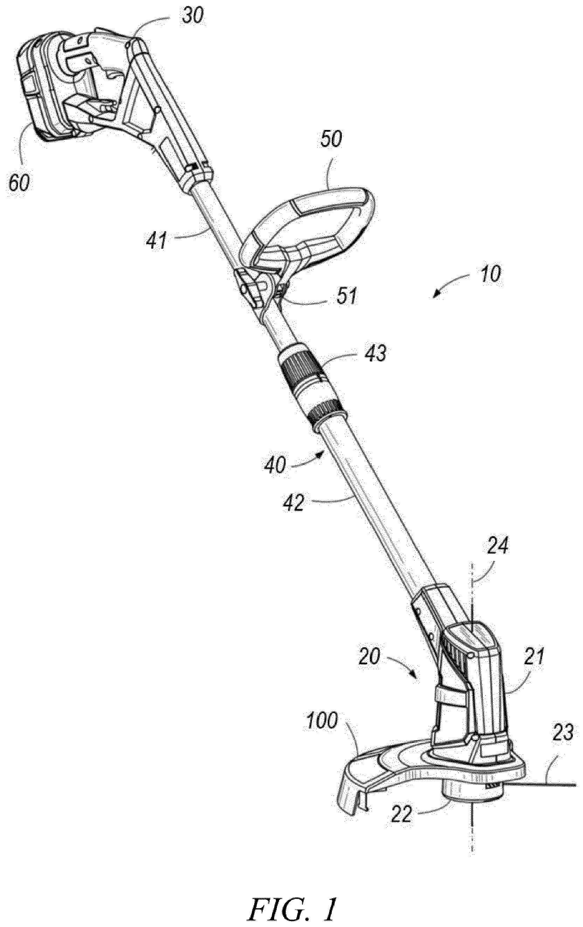

FIG. 1 shows an electric grass trimmer 10, which includes a trimmer head 20, a main handle 30, and a tube assembly 40 extending between the trimmer head and the main handle. The tube assembly 40 is rotatable and retractable, and includes an upper tube 41, a lower tube 42, and a locking mechanism 43 for locking the upper tube 41 and the lower tube 42. An auxiliary handle 50 is mounted on the upper tube 41, and the auxiliary handle is spaced apart from the main handle 30 to facilitate operation of the grass trimmer 10 by a user with both hands. A position and orientation of the auxiliary handle 50 on the upper tube 41 may be adjusted by means of a connecting member 51. The trimmer head 20 includes a housing 21 and a cutting head 22, and a cutting element 23 (e.g., a flexible rope) extends radially outwards from the cutting head 22. An electric motor is arranged in the housing 21 to drive the cutting head 22 to rotate about an axis 24, and a battery 60 mounted at an end of the main handle 30 provides electric power to the electric motor. The trimmer head 20 further includes a guard 100 arranged around the cutting head 22.

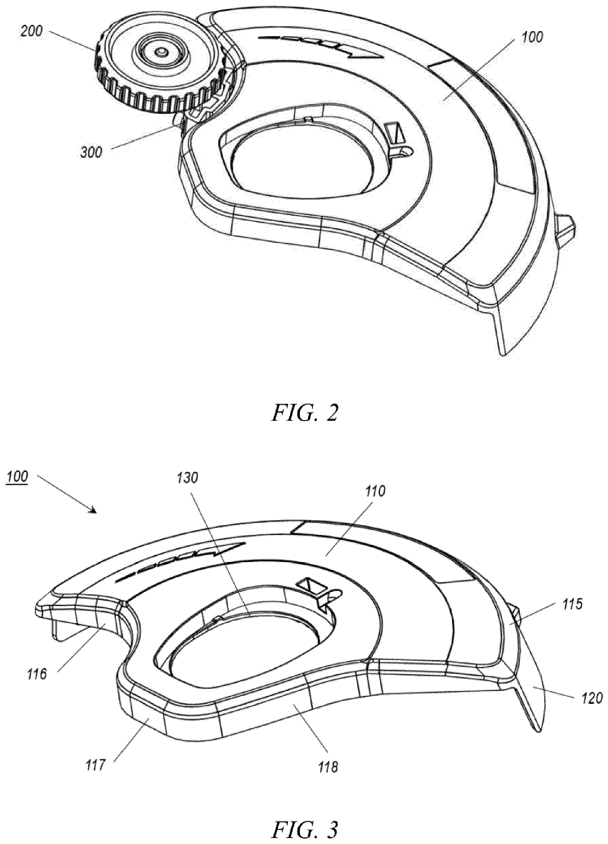

FIG. 2 shows a wheel attachment according to a first embodiment of the present invention, which includes a guide wheel 200 and a wheel mounting frame 300. The guide wheel 200 is rollably mounted on the wheel mounting frame 300, and the wheel mounting frame 300 is detachably fixed to the guard 100 of the garden tool. When the garden tool is used as a lawn edge trimmer, the user needs to mount the wheel attachment to the guard 100. When the garden tool is used as a grass trimmer, the user may choose to remove the wheel attachment from the guard 100. Since the wheel attachment itself is small in volume, even if the wheel attachment is mounted on the guard, the wheel attachment does not hinder normal operation of the grass trimmer, and thus the user may retain the wheel attachment when using the grass trimmer, which saves the time of dismounting and mounting.

FIG. 3 shows an embodiment of a guard 100. The guard 100 includes a cover portion 110 and a shield portion 120. A mounting opening 130 is formed in the cover portion 110 to receive an operating head of the garden tool, such as the trimmer head or an electric motor housing of the grass trimmer. An edge of the cover portion 110 includes side walls 115, 116, 117 and 118 extending downwards.

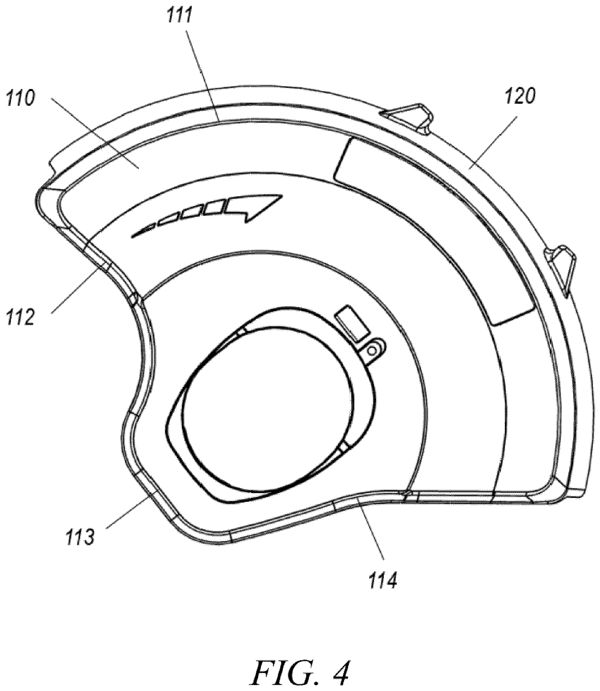

FIG. 4 shows a top view of a guard 100. It can be seen from the figure that an edge of a cover portion 110 does not form a complete circumference, but includes an arc-shaped first edge 111 and a non-arc-shaped second edge. The second edge may be subdivided into a plurality of edge sections, such as a recessed edge 112, a straight edge 113, and a curved edge 114. It can be seen with reference to FIGS. 3 and 4 that the arc-shaped first edge 111 includes an arc-shaped side wall 115, the recessed edge 112 includes a recessed side wall 116, the straight edge 113 includes a straight side wall 117, and the curved edge 114 includes a curved side wall 118.

The shield portion 120 is configured to surround at least a part of a circular cutting path of the cutting element when the cutting element rotates below the cover portion 110. The shield portion 120 in this embodiment extends downwards only from the arc-shaped side wall 115. The recessed side wall 116, the straight side wall 117 and the curved side wall 118 of the second edge do not extend to the level of the cutting element, so that the operation of the cutting element is not affected.

According to the present invention, the wheel mounting frame 300 is detachably fixed to an edge of the guard 100, such as the recessed side wall 116 in FIG. 3. That is to say, the guard itself serves as a supporting component for the wheel attachment. When the wheel attachment is mounted, there is no need to modify an existing garden tool or to use an additional connecting component. When the garden tool is used as an edge trimmer, the guard is perpendicular to a lawn, and thus the wheel attachment mounted on the guard can guide the edge trimmer to move along the boundary of the lawn.

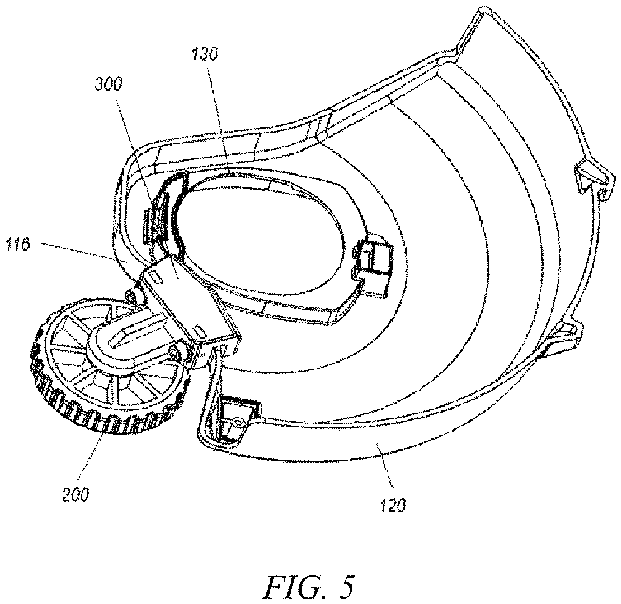

FIG. 5 shows a back face of the wheel attachment according to the first embodiment. When the wheel mounting frame 300 is fixed to the guard 100, a part of the recessed side wall 116 is clamped by the wheel mounting frame 300. At this time, the entire guide wheel 200 is located inside a circumference corresponding to the arc-shaped shield portion 120, i.e., inside a circumference corresponding to the arc-shaped first edge 111 in FIG. 4. When the edge trimmer is operating, the guide wheel 200 generally rolls on the outside (such as a concrete sidewalk) of the boundary of the lawn, and the cutting element trims the lawn along the boundary thereof. Arranging the wheel 200 close to the mounting opening 130 of the guard 100 allows the cutting element to cut at a certain depth. In other embodiments, the wheel mounting frame 300 may be fixed to the arc-shaped side wall 115, the straight side wall 117 or the curved side wall 118 of the edge of the guard. It should be understood that the size of the guide wheel 200 may also be changed to adapt to different operating environments.

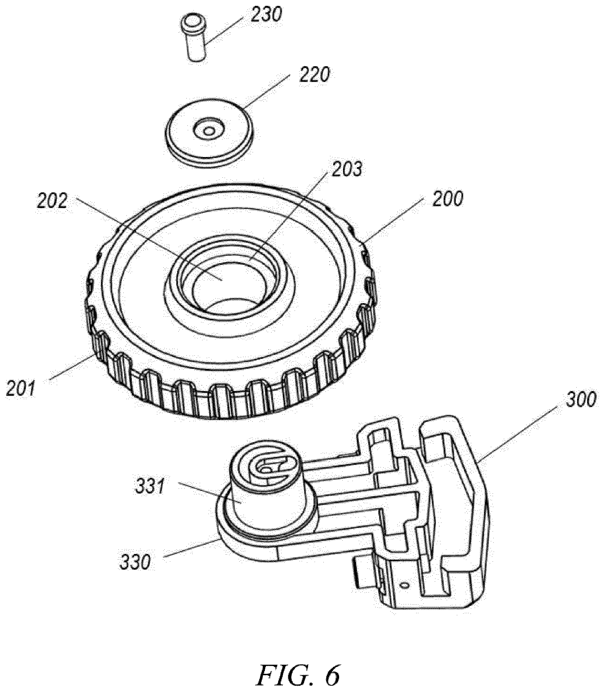

FIG. 6 shows an exploded view of the wheel attachment according to the first embodiment. An outer wall 201 of the guide wheel 200 is in contact with the ground when rolling, and an inner wall 202 delimits a through hole. In this embodiment, the outer wall 201 of the guide wheel 200 has alternately arranged recesses and protrusions. The inner wall 202 of the guide wheel defines a shoulder 203. The guide wheel 200 may be mounted on a wheel axle portion 331 of the wheel mounting frame 300 by using a cover plate 220 and a fastener 230. In other embodiments, the outer wall of the guide wheel may be smooth, or one or more grooves may be formed on the outer wall to increase the grip. It should be understood that although the wheel attachment in this embodiment is only equipped with a single guide wheel 200, it is also feasible to provide two or more guide wheels. The two guide wheels may be fixed on the same side of the wheel mounting frame 300, or may be located on two opposite sides of the wheel mounting frame.

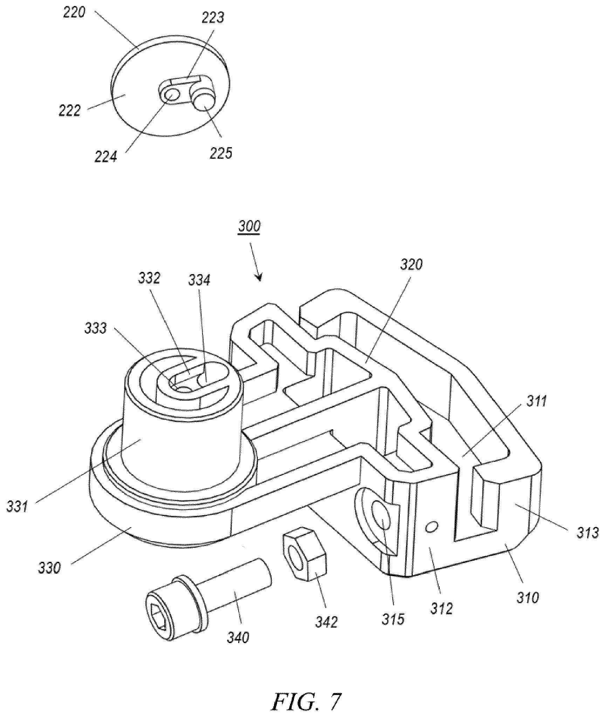

FIG. 7 shows a wheel mounting frame 300 and a cover plate 220. The wheel mounting frame 300 includes a fixing portion 310 and a wheel mounting portion 330. The wheel mounting portion 330 includes a wheel axle portion 331, and the guide wheel 200 may rotate around the wheel axle portion 331 when the mounting is completed. The entire wheel axle portion 331 is cylindrical, and extends to one side from the wheel mounting portion 330. An upper end of the wheel axle portion 331 forms a cover plate engagement portion that matches the cover plate 220. In this embodiment, the cover plate engagement portion includes a depression 332 with a roughly elliptical contour, and a fastener hole 333 for accommodating the fastener and a positioning hole 334 for fixing the position of the cover plate 220 are formed in the depression 332. Correspondingly, a projection 223 with a roughly elliptical contour is formed on a back face 222 of the cover plate 220. A fastener hole 224 for accommodating the fastener and a positioning pin 225 for inserting into the positioning hole 334 are formed on the projection 223. During assembly, the guide wheel 200 is fitted over the wheel axle portion 331 first. Then, the cover plate 220 covers the top of the wheel axle portion 331, such that the elliptical projection 223 and the positioning pin 225 respectively enter the elliptical depression 332 and the positioning hole 334. Finally, the cover plate 220 is fixed to the wheel axle portion 331 by means of the fastener 230. After the assembly is completed, the fastener 230 passes through the fastener hole 224 in the cover plate 220 and the fastener hole 333 in the wheel axle portion 331, and the positioning pin 225 is inserted into the positioning hole 334, so that the cover plate 220 cannot move relative to the wheel axle portion 331. Preferably, the size of the cover plate 220 is slightly greater than that of the wheel axle portion 331, such that an edge region of the cover plate 220 can cover the shoulder 203 (shown in FIG. 6) of the guide wheel 200. In this way, the movement of the guide wheel 200 in an axial direction is limited between the cover plate 220 and the wheel mounting portion 330 of the wheel mounting frame 300.

The fixing portion 310 of the wheel mounting frame 300 delimits a groove 311 for accommodating the edge of the guard 100. The edge of the guard is clamped by the fixing portion 310 when the wheel mounting frame 300 is fixed to the guard 100. In this embodiment, the fixing portion 310 includes first clamping portions 312 and a second clamping portion 313, and the groove 311 is located between the first clamping portion and the second clamping portion. The first clamping portion 312 delimits the fastener hole 315, and the fixing portion 310 clamps the edge of the guard 100 under the action of a fastener 340 passing through the fastener hole 315. The fastener may be a threaded fastener, such as a bolt 340 shown in the figure. As the bolt 340 is tightened, an end of the bolt 340 comes into contact with the outer surface of the edge of the guard 100 and applies a pressure to the outer surface, so as to clamp the guard together with the second clamping portion 313. A nut 342 meshing with the bolt 340 may be arranged inside the first clamping portion 312. In other embodiments, the fastener hole 315 may be a threaded hole.

Advantageously, the groove 311 in the fixing portion 310 is shaped to adapt to the shape of the edge of the clamped guard. The fixing portion 310 in this embodiment is configured to clamp the recessed side wall 116 in FIG. 3. The fixing portion 310 has a projection 320, which is located between the two first clamping portions 312. The projection 320 may form an inclined wall or an arc-shaped wall. When the recessed side wall 116 with a relatively small curvature is clamped between a screw 340 and the second clamping portion 313, a part of the projection 320 may abut against an outer surface of the recessed side wall 116.

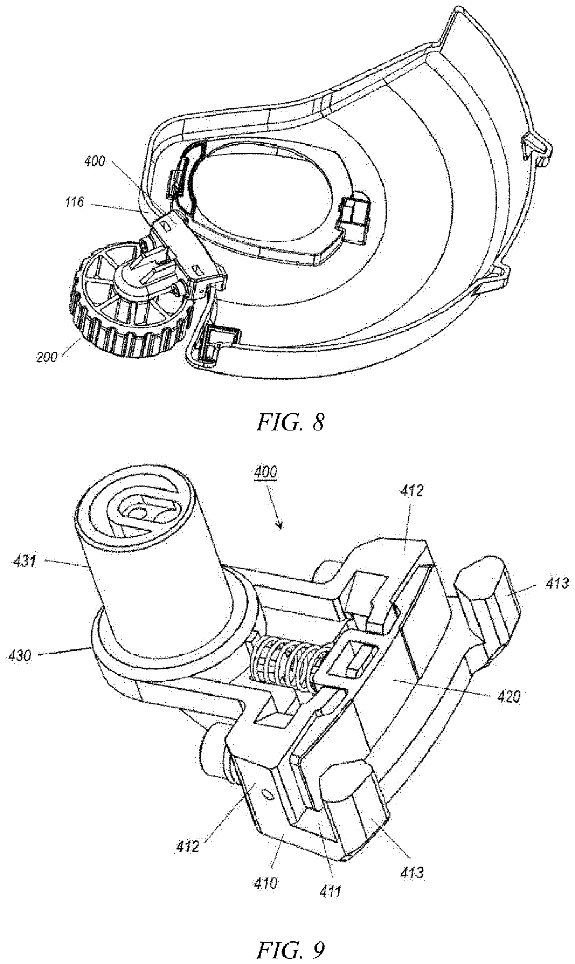

FIG. 8 shows a wheel attachment according to a second embodiment of the present invention, which includes a guide wheel 200 and a wheel mounting frame 400. Similarly to the first embodiment, when the wheel mounting frame 400 is fixed to the guard 100, a part of the recessed side wall 116 of the guard 100 is clamped by the wheel mounting frame 400.

FIG. 9 shows the wheel mounting frame 400 according to the second embodiment. The wheel mounting frame 400 includes a fixing portion 410 and a wheel mounting portion 430. The wheel mounting portion 430 includes a wheel axle portion 431, whose structure is the same as that of the wheel axle portion 331 of the first embodiment, so details are not described herein again. The fixing portion 410 includes first clamping portions 412 and second clamping portions 413, and a groove 411 for accommodating the edge of the guard 100 is delimited between the first clamping portions and the second clamping portions. Different from the first embodiment, the two second clamping portions 413 in this embodiment are separate from each other. In addition, the fixing portion 410 in this embodiment further includes a pressing portion 420, and when the wheel mounting frame 400 is fixed to the guard 100, at least a part of the pressing portion 420 applies a pressure to the outer surface of the edge of the guard, such that the guard is clamped between the pressing portion 420 and the second clamping portions 413.

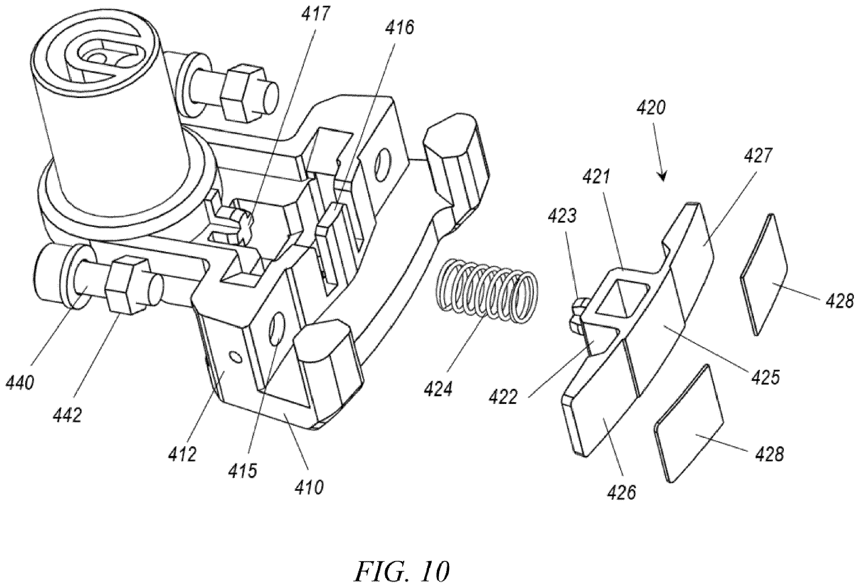

FIG. 10 shows an exploded view of the wheel mounting frame 400. The pressing portion 420 is formed as a separate component, which is detachably mounted on the fixing portion 410. Specifically, the pressing portion 420 includes a connecting portion 421 and a contact portion 425. The connecting portion 421 defines a hollow frame 422, which is assembled onto a post 416 of the fixing portion 410. The contact portion 425 may be integrally formed with the connecting portion 421. When the wheel mounting frame 400 is fixed to the guard 100, the contact portion 425 abuts against the outer surface of the edge of the guard 100. The wheel mounting frame 400 further includes a biasing component 424, such as a spring, which applies a biasing force towards the guard 100 to the contact portion 425. In order to fix the biasing component 424, a holding seat 417, 423 may be formed on the fixing portion 410 and/or the connecting portion 421.

Similarly to the first embodiment, the first clamping portion 412 of the fixing portion 410 delimits a fastener hole 415, and a nut 442 meshing with a threaded fastener 440 may be accommodated inside the first clamping portion 412. However, an end of the fastener 440 in this embodiment pushes the contact portion 425 on the pressing portion 420 towards the edge of the guard rather than being in direct contact with the outer surface of the edge of the guard and applying a pressure to the outer surface. The contact portion 425 may have a protruding contact face to match the shape of the edge of the guard 100. Compared with the first embodiment, a contact area between the contact portion 425 and the edge of the guard is larger, so that the edge of the guard will not be marked or even damaged due to the long-time compression by the end of the fastener. The contact portion 425 includes a first contact portion 426 and a second contact portion 427 located on two sides of the connecting portion 421, and a friction-increasing material 428, such as abrasive paper or a coating, may be provided on at least one of the first contact portion and the second contact portion. It should be understood that the friction-increasing material may also be provided on another surface in contact with the edge of the guard 100, such as an inner surface of the second clamping portion 413.

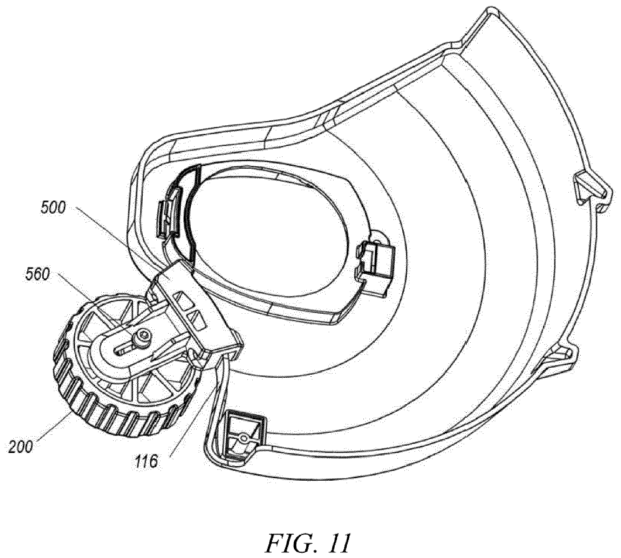

FIG. 11 shows a wheel attachment according to a third embodiment of the present invention, which includes a guide wheel 200 and a wheel mounting frame 500. The wheel mounting frame 500 includes a wheel position adjustment mechanism 560, which allows the user to change the position of the guide wheel 200 relative to the guard 100.

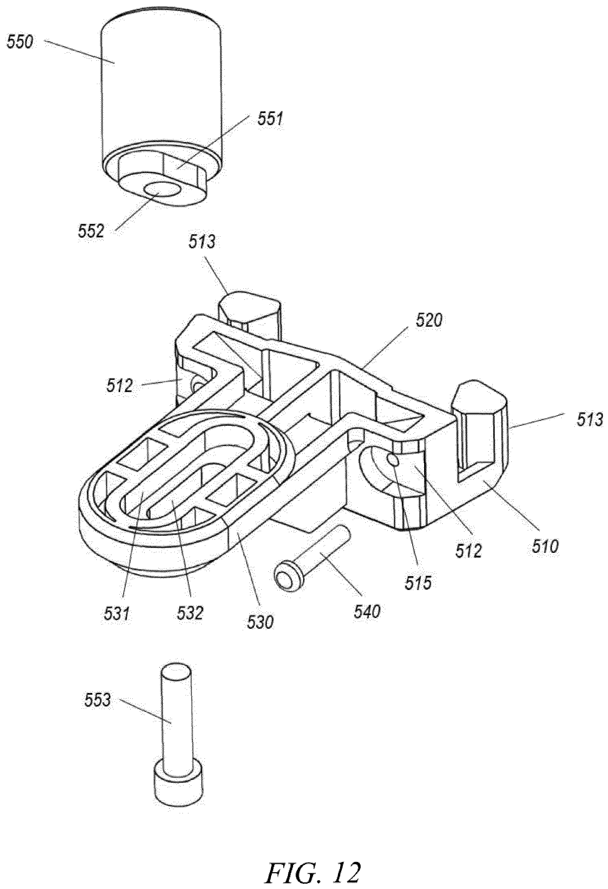

FIG. 12 shows an exploded view of the wheel mounting frame 500. The wheel mounting frame 500 includes a fixing portion 510, a wheel axle holding portion 530, and a wheel axle 550. The structure of the fixing portion 510 is similar to that of the fixing portion 310 of the first embodiment. The fixing portion 510 includes first clamping portions 512 and second clamping portions 513, and a groove for accommodating the edge of the guard 100 is delimited between the first clamping portions and the second clamping portions. A fastener hole 515 is formed in the first clamping portion 512 to receive a fastener 540. The fixing portion 510 further includes a projection 520 protruding towards the guard, and the projection 520 connects the two first clamping portions 512 located on two sides.

In this embodiment, the position of the wheel axle 550 relative to the wheel axle holding portion 530 is adjustable. The wheel position adjustment mechanism 560 includes a slider 551 located at the bottom of the wheel axle 550 and a guide groove 531 formed in the wheel axle holding portion 530. The user may adjust the position of the guide wheel 200 by changing the position of the slider 551 in the guide groove 531, so as to change a cutting depth. The size of the guide groove 531 may be selected as required, for example, in the range of 10 cm to 30 cm.

After the adjustment is completed, the position of the wheel axle 550 needs to be fixed. For this purpose, fastener holes may be formed in the wheel axle 550 and the wheel axle holding portion 530. The fastener hole 552 of the wheel axle 550 may be formed in the slider 551. The fastener hole 532 of the wheel axle holding portion 530 may be a long through hole or a plurality of round holes corresponding to different cutting depths. A fastener 553 passing through the fastener holes 552, 532 is configured to lock the position of the guide wheel.

It should be understood that the wheel position adjustment mechanism shown in FIG. 12 is non-limiting, and various modifications not shown fall within the scope of the present invention. For example, the size of the guide groove 532 may be designed to allow the wheel axle 550 to move therein, or the slider 511 is arranged at other positions on the wheel axle 550. In addition to manual adjustment, an actuator driven by the electric motor may also be used to precisely control the position of the guide wheel.

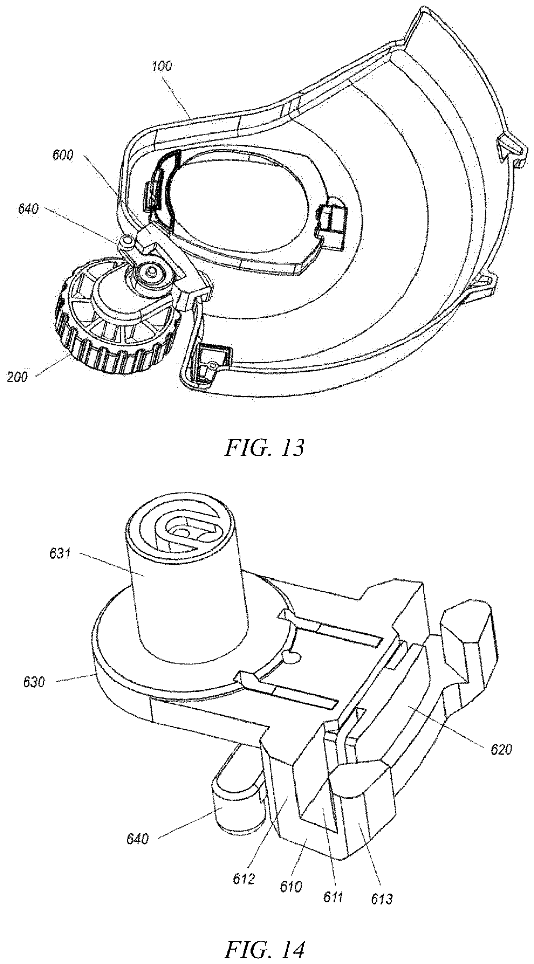

FIG. 13 shows a wheel attachment according to a fourth embodiment of the present invention, which includes a wheel 200 and a wheel mounting frame 600. The wheel mounting frame 600 includes an actuating member 640, which allows the user to fix the wheel attachment to the guard 100 and remove the wheel attachment from the guard 100 without using a tool.

FIG. 14 shows a wheel mounting frame 600, which includes a fixing portion 610 and a wheel mounting portion 630. The wheel mounting portion 630 includes a wheel axle portion 631, whose structure is the same as that of the wheel axle portion 331 of the first embodiment, so details are not described herein again. The fixing portion 610 includes first clamping portions 612 and second clamping portions 613, and a groove 611 for accommodating the edge of the guard 100 is delimited between the first clamping portions and the second clamping portions. The fixing portion 610 further includes a pressing portion 620, and when the wheel mounting frame 600 is fixed to the guard 100, at least a part of the pressing portion 620 applies a pressure to the outer surface of the edge of the guard, so that the guard is clamped between the pressing portion 620 and the second clamping portions 613.

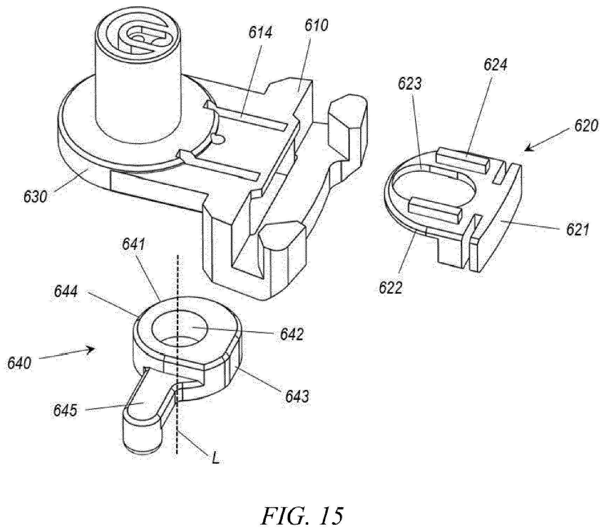

FIG. 15 shows an exploded view of the wheel mounting frame 600. The pressing portion 620 applies the pressure to the outer surface of the edge of the guard under the action of the actuating member 640. The actuating member 640 comprises a cam 641, which can move between a locked position and an unlocked position. When the cam 641 is in the locked position, the pressing portion 620 applies the pressure to the outer surface of the edge of the guard 100 under the action of the cam 641, to fix the wheel mounting frame 600 to the edge of the guard 100. When the cam 641 is in the unlocked position, the pressure applied to the guard 100 by the pressing portion 620 decreases or disappears, such that the wheel mounting frame 600 can be removed from the guard 100.

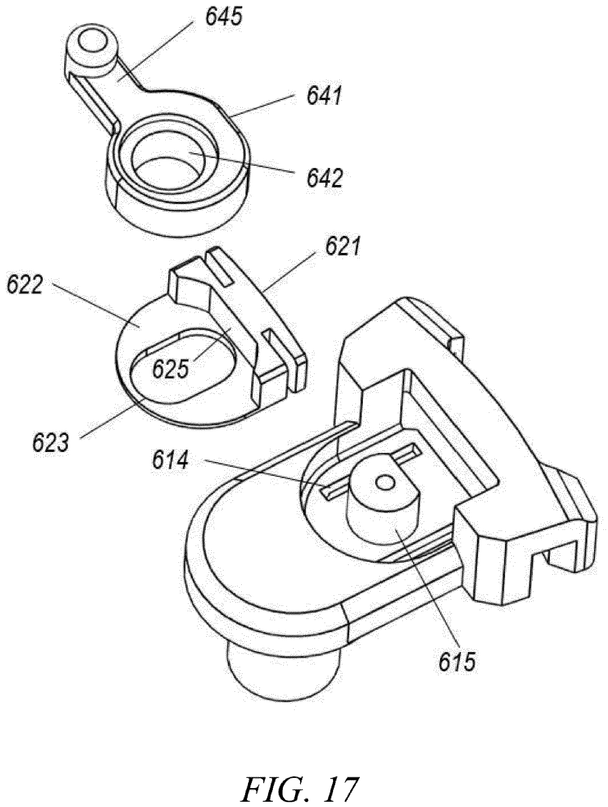

The cam 641 can rotate about an axis L. The cam 641 delimits a through hole 642 to facilitate mounting of the cam 641 on a cam rotating shaft 615 (shown in FIG. 17) defining the axis L. The actuating member 640 further includes an operating portion 645 connected to the cam 641. The operating portion 645 may be integrally formed with the cam 641, and extends radially outwards from an outer surface of the cam 641. The cam 641 can rotate between the locked position and the unlocked position under the action of the operating portion 645. The outer surface of the cam 641 includes a locking face 643 and an unlocking face 644, which are respectively located on two opposite sides of the cam 641, preferably on two sides of the operating portion 645. A shortest distance between the locking face 643 and the axis L is greater than a shortest distance between the unlocking face 644 and the axis L. In this embodiment, at least a part of the locking face 643 is a flat surface, and the unlocking face 644 is a cambered face. A skilled person should understand that the locking face 643 and the unlocking face 644 in other shapes are also feasible.

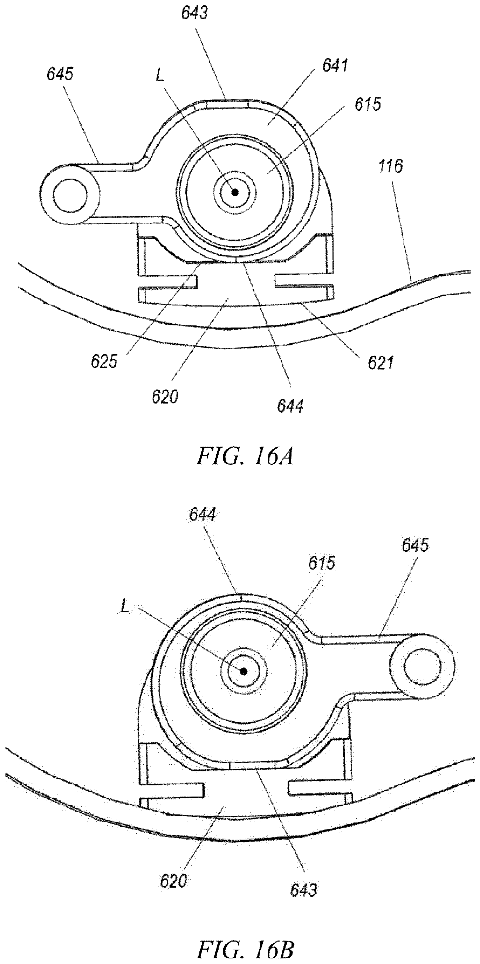

FIGS. 16A and 16B respectively show the cam 641 in the locked position and the unlocked position. When in the unlocked position, the unlocking face 644 of the cam 641 is in contact with a stressed surface 625 of the pressing portion 620, and the locking face 643 is far away from the stressed surface 625. Since the distance between the unlocking face 644 and the axis L is relatively small, there is a gap between a pressing surface 621 of the pressing portion 620 and the recessed side wall 116 of the guard. In this state, the user can place the wheel mounting frame 600 on the guard or remove the wheel mounting frame 600 from the guard. When in the locked position, the locking face 643 of the cam 641 is in contact with the stressed surface 625, and the unlocking face 644 is far away from the stressed surface 625. Since the distance between the locking face 643 and the axis L is relatively large, the pressing surface 621 of the pressing portion 620 is in contact with the recessed side wall 116 of the guard under the action of the cam 641 and applies a pressure to the recessed side wall, so as to fix the wheel mounting frame 600 to the guard 100. Preferably, the locked position and the unlocked position differ by 180 degrees. When the user rotates the operating portion 645 clockwise, the cam 641 rotates together therewith and pushes the pressing portion 620 to move towards the guard 100.

Alternatively, a restoring member, such as a restoring spring, is provided for the pressing portion 620, and applies a restoring force to the pressing portion 620. When the cam 641 is in the locked position, if the user rotates the operating portion 645 counterclockwise, the pressing portion 620 moves away from the guard 100 under the action of the restoring force, and the stressed surface 625 of the pressing portion 620 keeps in contact with the cam 641.

FIG. 17 shows an exploded view of the wheel mounting frame 600 viewed from another direction. The pressing portion 620 includes a bottom face 622 in which a through hole 623 is formed. After the assembly is completed, the cam 641 is supported on the bottom face 622, and the cam rotating shaft 615 passes through the through hole 623 in the pressing portion 620 and the through hole 642 in the cam 641.

The pressing portion 620 is movably connected to the fixing portion 610. In order to guide the movement of the pressing portion 620 towards or away from the guard 100, at least one of the pressing portion 620 and the fixing portion 610 may be provided with a guide portion. The pressing portion 620 in FIG. 15 includes two elongated guide portions 624, which are located on two sides of the through hole 623 and extend in a moving direction of the pressing portion 620. Correspondingly, two elongated guide grooves 614 are formed in the fixing portion 610. After the assembly is completed, at least a part of the elongated guide portion 624 is located in the respective elongated guide groove 614. The guide groove 614 define the moving direction and range of the guide portion 624. In addition, the through hole 623 of the pressing portion 620 may also be designed as an elongated hole. When the pressing portion 620 moves towards or away from the guard 100, the elongated hole 623 moves relative to the cam rotating shaft 615. Therefore, the size of the elongated hole 623 can also limit the moving range of the pressing portion 620.

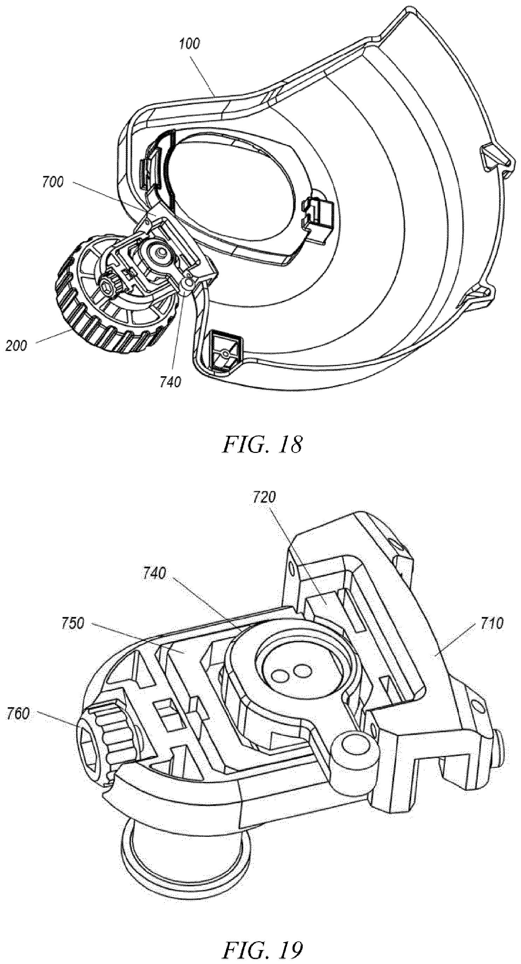

FIG. 18 shows a wheel attachment according to a fifth embodiment of the present invention, which includes a wheel 200 and a wheel mounting frame 700. Similarly to the fourth embodiment, the wheel mounting frame 700 includes an actuating member 740, which allows the user to mount the wheel attachment onto the guard 100 and remove the wheel attachment from the guard 100 without using a tool.

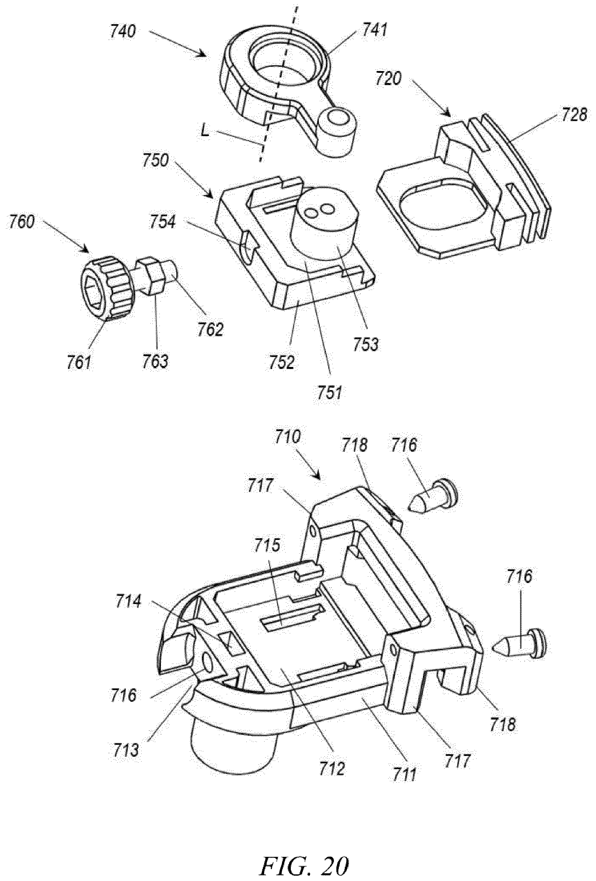

FIG. 19 shows the wheel mounting frame 700 according to the fifth embodiment. The wheel mounting frame 700 includes a fixing portion 710, a pressing portion 720, an actuating member 740, an actuating member holding portion 750, and an adjusting member 760. The actuating member 740 is the same as the actuating member 640 in the fourth embodiment, and also includes a cam and an operating portion. The pressing portion 720 is similar to the pressing portion 620 in the fourth embodiment, except that a friction-increasing material 728 (shown in FIG. 20) is provided on a pressing surface of the pressing portion 620.

In the fourth embodiment shown in FIG. 17, the cam rotating shaft 615 defining the rotation axis L of the cam 641 is integrally formed with the fixing portion 610, so the position of the rotation axis L is fixed. When the thickness of the edge of the guard is too small, even if the cam 641 moves to the locked position, the pressing portion 620 may not be able to apply a sufficient pressure to the guard. When the thickness of the guard is too large, the cam 641 may not be able to move to the locked position.

In order to adapt to guards with different sizes and shapes, the wheel mounting frame 700 in the fifth embodiment allows the user to adjust the position of the rotation axis of the cam. FIG. 20 shows an exploded view of the wheel mounting frame 700. The rotation axis L of the cam 741 is defined by a cam rotating shaft 753, and the cam rotating shaft 753 is fixed to the actuating member holding portion 750. The actuating member holding portion 750 includes a bottom 751 and a side wall 752, and the cam rotating shaft 753 extends from the bottom 751. The actuating member holding portion 750 is placed in an accommodating space 712 of the fixing portion 710, and the accommodating space 712 is at least partially delimited by a side wall 711 of the fixing portion 710. The actuating member holding portion 750 is configured to be movable in the accommodating space 712. In order to guide the movement of the actuating member holding portion 750, a guide groove 715 may be formed in the fixing portion 710, and a guide block (not visible in the figure) protruding downwards is provided at the bottom 751 of the actuating member holding portion 750.

The user may change the position of the actuating member holding portion 750 by means of the adjusting member 760. In this embodiment, the adjusting member 760 includes a knob 761, a bolt 762, and a nut 763. The knob 761 is located at one end of the bolt 762 and meshes with the bolt 762, and the nut 763 is located between two ends of the bolt 762 and meshes with the bolt 762. The fixing portion 710 includes a recess 713, which is configured to receive the knob 761. A punched hole 716 is formed between the recess 713 and the accommodating space 712, and is used to accommodate the bolt 762. A compartment 714 is further provided between the recess 713 and the accommodating space 712, and is used to accommodate the nut 762. After the assembly is completed, the bolt 762 extends into the accommodating space 712, and by rotating the knob 761, the user can adjust the distance by which the end of the bolt 762 enters the accommodating space 712.

A notch 754 may be formed in the side wall 752 of the actuating member holding portion 750 facing the adjusting member 760, and the notch is in contact with the end of the bolt 762. When the user rotates the knob in a forward direction, the bolt 762 applies a pressure to the notch 754, and the actuating member holding portion 750 moves towards the guard under the push of the end of the bolt 762. This causes the rotation axis L of the cam 741 to approach the guard. Alternatively, a restoring member, such as a restoring spring, is provided for the actuating member holding portion 750. When the user rotates the knob in a reverse direction, the actuating member holding portion 750 moves away from the guard 100 under the action of the restoring member. In this way, the user can adjust the position of the cam 741 by means of the knob 761, so that the same wheel mounting frame 700 can be fixed to various guards with different shapes and sizes.

FIG. 20 further shows two pointed screws 716, which are respectively arranged on two second clamping portions 718 of the fixing portion 710, and tips of the screws 716 face the first clamping portions 717. When the user rotates the cam 741 from the unlocked position to the locked position by using the operating member, the pressing portion 720 presses against the outer surface of the edge of the guard, and at the same time, the tips of the screws 716 form pressure marks on the inner surface of the edge of the guard, so as to fix the wheel mounting frame 700 to the guard.

Although the present invention has been described in detail with limited embodiments, it should be understood that the present invention is not limited to these disclosed embodiments. Those of ordinary skill in the art may envisage other implementations that conform to the spirit and scope of the present invention, including changes of the number of components, alterations, substitutions, or equivalent arrangements, and these implementations fall within the scope of the present invention.

## Claims

1. A wheel attachment for a garden tool, **characterized by** comprising:
a guide wheel (200); and
a wheel mounting frame (300, 400, 500, 600, 700), on which the guide wheel is rollably mounted, and which is detachably fixed to a guard (100) of the garden tool,
wherein the wheel mounting frame comprises a fixing portion (310, 410, 510, 610, 710), which is detachably fixed to an edge of the guard.

2. The wheel attachment of claim 1, **characterized in that** the fixing portion delimits a groove (311, 411, 611) for accommodating the edge of the guard, and the edge of the guard is clamped by the fixing portion when the wheel mounting frame is fixed to the guard.

3. The wheel attachment of claim 2, **characterized in that** the guard (100) comprises a cover portion (110) and a shield portion (120), wherein the cover portion has an arc-shaped first edge (111) and a non-arc-shaped second edge (112, 113, 114), and when the wheel mounting frame is fixed to the guard, at least a part of the second edge (112, 113, 114) is clamped by the fixing portion (310, 410, 510, 610); preferably, the second edge (112, 113, 114) comprises a side wall (116, 117, 118), and at least a part of the side wall is clamped by the fixing portion (310, 410, 510, 610, 710).

4. The wheel attachment of claim 3, **characterized in that** the shield portion (120) extends from the first edge (111), and when the wheel mounting frame is fixed to the guard, the guide wheel (200) is located inside a circumference corresponding to the first edge; preferably, the second edge (112, 113, 114) comprises a recessed edge (112), the recessed edge (112) comprises a recessed side wall (116), and at least a part of the recessed side wall is clamped by the fixing portion.

5. The wheel attachment of any one of claims 2 to 4, **characterized in that** the fixing portion (310, 410, 610) comprises a first clamping portion (312, 412, 612) and a second clamping portion (313, 413, 613), and the groove (311, 411, 611) for accommodating the edge of the guard is delimited between the first clamping portion and the second clamping portion; preferably, the second clamping portion (718) is provided with a pointed screw (716) having a tip facing the first clamping portion (717).

6. The wheel attachment of claim 5, **characterized in that** the first clamping portion (312) delimits a fastener hole (315), and when the wheel mounting frame (300) is fixed to the guard, a fastener passing through the fastener hole (315) is in contact with an outer surface of the edge of the guard and applies a pressure to the outer surface, so as to clamp the edge of the guard together with the second clamping portion (313); preferably, the fastener comprises a threaded fastener (340), and preferably, the fastener further comprises a nut (342), which is arranged inside the first clamping portion (312).

7. The wheel attachment of claim 5, **characterized in that** the wheel mounting frame comprises a pressing portion (420, 620, 720), and when the wheel mounting frame is fixed to the guard, at least a part of the pressing portion abuts against an outer surface of the edge of the guard; preferably, a friction-increasing material is provided on at least a part of the pressing portion (420, 620, 720), and preferably, abrasive paper is provided on at least a part of the pressing portion.

8. The wheel attachment of claim 7, **characterized in that** the pressing portion (420) comprises a connecting portion (421) and a contact portion (425), wherein the connecting portion (421) is connected to the fixing portion (410) and is movable relative to the fixing portion (410), and when the wheel mounting frame is fixed to the guard, the contact portion (425) abuts against the outer surface of the edge of the guard.

9. The wheel attachment of claim 8, **characterized in that** the wheel mounting frame further comprises a biasing component (424), which applies a biasing force towards the guard to the contact portion (425); preferably, a seat (423) for holding the biasing component (424) is formed on the connecting portion (421); preferably, the first clamping portion (412) delimits a fastener hole (415), and when the wheel mounting frame is fixed to the guard, an end of a fastener (440) passes through the fastener hole (415) and applies a pressure to the contact portion (425).

10. The wheel attachment of claim 5, **characterized in that** the wheel mounting frame (500) further comprises a wheel axle (550) defining a rotation axis of the guide wheel (200) and a wheel axle holding portion (530) for fixing the wheel axle (550), and a position of the wheel axle (550) relative to the wheel axle holding portion (530) is adjustable; preferably, the wheel axle holding portion (530) delimits a guide groove (531), and at least a part of the wheel axle (550) is movable in the guide groove (531).

11. The wheel attachment of claim 7, **characterized in that** the wheel mounting frame (600, 700) further comprises an actuating member (640, 740), and the pressing portion (620, 720) applies a pressure to the outer surface of the edge of the guard under the action of the actuating member.

12. The wheel attachment of claim 11, **characterized in that** the actuating member (640, 740) comprises a cam (641, 741) movable between a locked position and an unlocked position; when the cam moves towards the locked position, the cam pushes the pressing portion (620, 720) to move towards the guard (100); when the cam is in the locked position, the pressing portion (620, 720) applies the pressure to the outer surface of the edge of the guard; and when the cam is in the unlocked position, the wheel mounting frame (600, 700) is removable from the guard.

13. The wheel attachment of claim 12, **characterized in that** the actuating member (640, 740) further comprises an operating portion connected to the cam (641,741), and the cam is rotatable between the locked position and the unlocked position under the action of the operating portion; and preferably, the locked position and the unlocked position differ by 180 degrees.

14. The wheel attachment of claim 13, **characterized in that** the pressing portion (620) is movably connected to the fixing portion (610), and at least one of the pressing portion and the fixing portion is provided with a guide portion (624, 614) for guiding a movement of the pressing portion (620) towards or away from the guard.

15. The wheel attachment of claim 12, **characterized in that** the wheel mounting frame (700) further comprises an actuating member holding portion (750) and an adjusting member (760), wherein a cam rotating shaft (753) defining a rotation axis (L) of the cam (741) is fixed to the actuating member holding portion (750), and a position of the actuating member holding portion (750) is changeable by operating the adjusting member (760); preferably, the adjusting member (760) comprises a knob (761) and a bolt (762), wherein an end of the bolt (762) is in contact with the actuating member holding portion (750), and a rotation of the knob (761) in one direction causes the end of the bolt (762) to push the actuating member holding portion (750).
